(19) Europäisches Patentamt

European Patent Office

Office européen des brevets

(11) **EP 4 442 762 A1**

(12) **EUROPEAN PATENT APPLICATION**
published in accordance with Art. 153(4) EPC

(43) Date of publication:
**09.10.2024 Bulletin 2024/41**

(21) Application number: **22901327.1**

(22) Date of filing: **29.11.2022**

(51) International Patent Classification (IPC):
**C08L 67/02** (2006.01)      **C08K 3/013** (2018.01)
**C08K 3/04** (2006.01)      **C08K 7/04** (2006.01)

(52) Cooperative Patent Classification (CPC):
**C08K 3/013; C08K 3/04; C08K 7/04; C08L 67/02;**
Y02W 30/62

(86) International application number:
**PCT/JP2022/044036**

(87) International publication number:
**WO 2023/100895 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021195021**

(71) Applicant: **Mitsubishi Chemical Corporation
Tokyo 100-8251 (JP)**

(72) Inventors:
- **SUZUKI, Takayuki**
  **Hiratsuka-shi, Kanagawa 254-0016 (JP)**
- **KOBAYASHI, Rina**
  **Hiratsuka-shi, Kanagawa 254-0016 (JP)**
- **KURODA, Tatsuya**
  **Hiratsuka-shi, Kanagawa 254-0016 (JP)**
- **HIWATASHI, Yuki**
  **Hiratsuka-shi, Kanagawa 254-0016 (JP)**

(74) Representative: **Hoffmann Eitle
Patent- und Rechtsanwälte PartmbB
Arabellastraße 30
81925 München (DE)**

(54) **RESIN COMPOSITION, MOLDED ARTICLE, AND PELLET**

(57)      To provide a resin composition containing a polyethylene terephthalate resin and an inorganic filler, wherein when one cycle is defined as an operation in which, based on JIS K7121, a temperature is increased by DSC from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation and/or an absolute value of a heat of crystallization during the heating phase in a second cycle ($\Delta H_{Tc1}$-2nd) of less than 3 J/g, and a content of the inorganic filler in the resin composition is 40% by mass or more.

EP 4 442 762 A1

**Description**

[Technical Field]

The present invention relates to a resin composition, a molded article, a vehicle exterior component, and a pellet. In particular, the present invention relates to a resin composition that includes a polyethylene terephthalate resin.

[Background Art]

Polyester resins have excellent mechanical performance, electrical properties, processing properties, and the like, and are widely used for various purposes.

Examples of known polyester resins include polyethylene terephthalate resins and polybutylene terephthalate resins. In particular, resin compositions that contain a polyethylene terephthalate resin and a polybutylene terephthalate resin have been studied (Patent Literature 1 to Patent Literature 3).

[Citation List]

[Patent Literature]

[Patent Literature 1]
International Publication No. WO 2019/217680
[Patent Literature 2]
Japanese Patent Laid-Open No. 2018-203932A A
[Patent Literature 3]
International Publication No. WO 2020/246335

[Summary of the Invention]

[Object of the Invention]

Here, it has been found that impact resistance may become a problem for resin compositions that include a polyethylene terephthalate resin and a polybutylene terephthalate resin.

It is an object of the present invention to solve this problem, and the present invention provides a resin composition that includes a polyethylene terephthalate resin and an inorganic filler and that has excellent impact resistance, as well as a molded article, a vehicle exterior component, and a pellet formed from such a resin composition.

[Solution to Problem]

The present inventors conducted research to address the above-mentioned problems, and as a result, discovered that the above problems could be solved by using a predetermined polyethylene terephthalate resin. Specifically, the problems described above are solved by the following means.

<1> A resin composition comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,
the polyethylene terephthalate resin has an absolute value of a heat of crystallization during a heating phase in a first cycle ($\Delta H_{Tc1}$-1st) of the operation and/or an absolute value of a heat of crystallization during the heating phase in a second cycle ($\Delta H_{Tc1}$-2nd) of the operation of less than 3 J/g, and a content of the inorganic filler in the resin composition is 40% by mass or more.

<2> The resin composition according to <1> comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,

wherein the polyethylene terephthalate resin has an absolute value of a heat of crystallization during a heating phase in a first cycle ($\Delta H_{Tc1}$-1st) of the operation of less than 3 J/g, and a content of the inorganic filler in the resin composition is 40% by mass or more.

<3> The resin composition according to <1> comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,

wherein the polyethylene terephthalate resin has an absolute value of a heat of crystallization during a heating phase in a second cycle ($\Delta H_{Tc1}$-2nd) of the operation of less than 3 J/g, and a content of the inorganic filler in the resin composition is 40% by mass or more.

<4> The resin composition according to any one of <1> to <3>, wherein the polyethylene terephthalate resin comprises a unit derived from an isophthalic acid in a proportion of 0.5 mol% or more and 15.0 mol% or less of all units derived from a dicarboxylic acid component.

<5> The resin composition according to any one of <1> or <4>, wherein the polyethylene terephthalate resin has an intrinsic viscosity of 0.60 dL/g or more (preferably more than 0.70 dL/g).

<6> The resin composition according to any one of <1> to <5>, wherein the polyethylene terephthalate resin comprises a recycled product.

<7> The resin composition according to any one of <1> to <6>, wherein the polyethylene terephthalate resin comprises a polyethylene terephthalate resin in which at least a part of a raw material is a bio-derived raw material.

<8> The resin composition according to any one of <1> to <7>, wherein the inorganic filler comprises a fibrous inorganic filler.

<9> The resin composition according to any one of <1> to <8>, which further comprises a nucleating agent in a proportion of from 0.01 to 10 parts by mass with respect to 100 parts by mass of the polyethylene terephthalate resin.

<10> The resin composition according to <9>, wherein the nucleating agent comprises an alkali metal salt of a fatty acid.

<11> The resin composition according to <10>, wherein the nucleating agent has a content of from 0.05 to 1 part by mass.

<12> The resin composition according to <10>, wherein the nucleating agent has a content of from 0.1 to 0.6 part by mass.

<13> The resin composition according to any one of <1> to <12>, which further comprises carbon black in a proportion of from 0.01 to 6 parts by mass with respect to 100 parts by mass of the polyethylene terephthalate resin.

<14> The resin composition according to any one of <1> to <13>, which further comprises a reactive compound in a proportion of from 0.01 to 10.0 parts by mass with respect to 100 parts by mass of the polyethylene terephthalate resin.

<15> The resin composition according to any one of <1> to <14>, which is for a vehicle component.

<16> The resin composition according to any one of <1> to <15>, which is used for vehicle exterior component.

<17> The resin composition according to any one of <1> to <16>, wherein

0.5 mol% or more and 15.0 mol% or less of the polyethylene terephthalate resin with respect to all units derived from a dicarboxylic acid component is modified with an isophthalic acid,

the polyethylene terephthalate resin has an intrinsic viscosity of 0.60 dL/g or more (preferably more than 0.70 dL/g),

the inorganic filler comprises a fibrous inorganic filler,

the resin composition further comprises a nucleating agent in a proportion of from 0.01 to 10 parts by mass with respect to 100 parts by mass of the polyethylene terephthalate resin,

the nucleating agent comprises an alkali metal salt of a fatty acid,

the resin composition further comprises carbon black in a proportion of from 0.01 to 6 parts by mass with respect to 100 parts by mass of the polyethylene terephthalate resin, and

the resin composition further comprises an epoxy compound in a proportion of from 0.01 to 10 parts by mass with respect to 100 parts by mass of the polyethylene terephthalate resin.

<18> The resin composition according to <17>, wherein the polyethylene terephthalate resin comprises a recycled product.

<19> A molded article formed from the resin composition of any one of <1> to <18>.

<20> A vehicle exterior component formed from the resin composition of any one of <1> to <18>.

<21> A pellet of the resin composition of any one of <1> to <18>.

[Advantageous Effects of Invention]

According to the present invention, it is possible to provide a resin composition that includes a polyethylene terephthalate resin and an inorganic filler and that has excellent impact resistance, as well as a molded article, a vehicle exterior component, and a pellet formed from such a resin composition.

[Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to" includes the numerical values described before and after "..." as a lower limit value and an upper limit value.

In this specification, various physical property values and characteristic values are assumed to be values as of 23°C, unless otherwise stated.

In this specification, the weight average molecular weight and number average molecular weight are, unless otherwise specified, polystyrene equivalent values measured by GPC (gel permeation chromatography).

If the measurement methods and the like described in the standards shown in this specification differ from year to year, unless otherwise stated, those measurement standards shall be based on the standards as of January 1, 2021.

The resin composition of this embodiment is characterized by including a polyethylene terephthalate resin and an inorganic filler, wherein when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation and/or an absolute value of a heat of crystallization during the heating phase in a second cycle ($\Delta H_{Tc1}$-2nd) of the operation of less than 3 J/g, and a content of the inorganic filler in the resin composition is 40% by mass or more.

With such a configuration, a molded article having excellent impact resistance can be obtained. The reason why a molded article having excellent impact resistance can be obtained is inferred to be that the resin crystallizes more easily.

In the resin composition of this embodiment, the polyethylene terephthalate resin preferably has, at least, an absolute value of a heat of crystallization during a heating phase in a first cycle ("$\Delta H_{Tc1}$-1st") of the operation of less than 3 J/g. Here, one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min. With such a configuration, a molded article having excellent impact resistance can be obtained. The reason why a molded article having excellent impact resistance can be obtained is inferred to be that the resin crystallizes more easily.

In addition, the resin composition of this embodiment preferably has, at least, an absolute value of a heat of crystallization during a heating phase in a second cycle ("$\Delta H_{Tc1}$-2nd") of the operation of less than 3 J/g.

The resin composition of this embodiment preferably has an absolute value of a heat of crystallization during a heating phase in a first cycle ($\Delta H_{Tc1}$-1st) of the operation and an absolute value of a heat of crystallization during the heating phase in a second cycle ($\Delta H_{Tc1}$-2nd) of the operation of less than 3 J/g, respectively.

With such a configuration, a molded article having excellent impact resistance can be obtained. The reason why a molded article having excellent impact resistance can be obtained is inferred to be that the resin crystallizes more easily.

<Polyethylene terephthalate resin>

The polyethylene terephthalate resin is a resin having a dicarboxylic acid and a diol as main constituent units. The polyethylene terephthalate resin used in this embodiment has, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, an absolute value of a heat of crystallization during a heating phase in a first cycle (hereinafter, sometimes referred to as "$\Delta H_{Tc1}$-1st") of the operation and/or an absolute value of a heat of crystallization during the heating phase in a second cycle (hereinafter, sometimes referred to as "$\Delta H_{Tc1}$-2nd") of the operation of less than 3 J/g. That is, it is preferred that, at least, a clear crystallization temperature during the heating phase in the first cycle (Tc1-1st) is not exhibited, or, at least, a clear crystallization temperature during the heating phase in the second cycle (Tc1-2nd) is not exhibited, it is more preferred that, at least, a clear crystallization temperature during the heating phase in the first cycle (Tc1-1st) is not exhibited, and it is further preferred that a clear crystallization temperature during the heating phase in the first cycle and the second cycle (Tc1-1st and Tc1-2nd) is not exhibited.

By using such a specific polyethylene terephthalate resin, the resin tends to crystallize more easily, and thus a molded product having excellent impact resistance tends to be obtained.

As the polyethylene terephthalate resin (hereinafter, sometimes referred to as "PET"), a virgin product (hereinafter, sometimes referred to as "virgin PET"), a recycled product (hereinafter, referred to as "recycled PET"), a bio-derived product (hereinafter, sometimes referred to as "bio-PET"), and a mixture thereof can be used. It is noted that bio-PET refers to a polyethylene terephthalate resin in which at least a part of the raw material is derived from a biological resource (biomass).

Examples of the recycled PET include PET obtained through material recycling, in which collected used PET bottles and films are crushed, washed with water or an alkali, and turned into fibers for reuse, PET obtained through chemical recycling (chemical decomposition), and PET obtained through mechanical recycling.

Chemical recycling involves chemically decomposing collected used PET bottles, films, and the like, returning them to a raw material level, and resynthesizing polyethylene terephthalate resin. On the other hand, mechanical recycling is a method that makes it possible to remove dirt from polyethylene terephthalate resin more reliably than material recycling, by performing the above-mentioned alkaline cleaning in material recycling more strictly or by vacuum drying at high temperature.

For example, after removing foreign substances from used PET bottles, the bottles are crushed and washed, then pelletized using an extruder, crystallized in an environment of approximately 120 to 150°C, and then subjected to solid phase polymerization in an environment of about 210°C under a nitrogen stream or under high vacuum to obtain recycled PET.

Examples of the bio-PET include PET produced by replacing monoethylene glycol, which is a raw material of PET, with an edible or non-edible plant-derived raw material, representatively a bio raw material derived from sugarcane.

In addition, the polyethylene terephthalate resin used in the present embodiment preferably has an absolute value of the heat of crystallization during a cooling phase in the first cycle (hereinafter sometimes referred to as "$\Delta H_{Tc2}$-1st") of 3 J/g or more. That is, it is preferred to have a clear crystallization temperature during the cooling phase (Tc2-1st). Using such a resin tends to facilitate crystallization, improve mold release properties, and improve moldability. Further, the Tc2-1st is preferably 160°C or higher, and more preferably 170°C or higher. By setting the Tc2-1st to be equal to or higher than the above lower limit, crystallization tends to be facilitated and mold release properties tend to be further improved. Further, the Tc2-1st is preferably 195°C or lower, and more preferably 186°C or lower. By setting the Tc2-1st to be equal to or lower than the above upper limit, the molding shrinkage rate tends to become smaller.

As such a polyethylene terephthalate resin, recycled PET, in particular recycled PET derived from PET bottles, is preferred.

The polyethylene terephthalate resin used in the present embodiment has a melting point in the first cycle (Tm-1st) of preferably 254°C or lower, more preferably 252°C or lower, further preferably 250°C or lower, and may be 245°C or lower, or 242°C or lower. By setting the melting point to be equal to or less than the above upper limit, molding can be performed at a lower resin temperature, and so moldability tends to be further improved. Further, the toughness of the resin composition tends to be improved. The lower limit is preferably 230°C or higher, and more preferably 235°C or higher. By setting the melting point to be equal to or more than the above lower limit, the mold release properties tend to be further improved. Moreover, the rigidity of the resin composition tends to be improved. When two or more melting peaks are observed, the lower temperature is taken as the melting point (Tm-1st).

In addition, the polyethylene terephthalate resin used in the present embodiment preferably has an absolute value of the heat of crystallization during a cooling phase in the second cycle ("$\Delta H_{Tc2}$-2nd") of 3 J/g or more. That is, it is preferred to have a clear crystallization temperature during the cooling phase (Tc2-2nd). Having such a configuration tends to facilitate crystallization, improve mold release properties, and improve moldability. Further, the crystallization temperature during the cooling phase in the second cycle (Tc2-2nd) is preferably 150°C or higher, and more preferably 160°C or higher. By setting the Tc2-2nd to be equal to or higher than the above lower limit, crystallization tends to be facilitated and mold release properties tend to be further improved. Moreover, the Tc2-2nd is preferably 190°C or lower, more preferably 185°C or lower, further preferably 180°C or lower, still further preferably 175°C or lower, and may be 170°C or lower. By setting the Tc2-2nd to be equal to or lower than the above upper limit, the molding shrinkage rate tends to become smaller.

As such a polyethylene terephthalate resin, recycled PET, in particular recycled PET derived from PET bottles, is preferred.

The polyethylene terephthalate resin used in the present embodiment has a melting point in the second cycle (Tm-2nd) of preferably 254°C or lower, more preferably 252°C or lower, and further preferably 250°C or lower. By setting the melting point to be equal to or less than the above upper limit, molding can be performed at a lower resin temperature, and so moldability tends to be further improved. The lower limit of the Tm-2nd is preferably 230°C or higher, and more preferably 235°C or higher. By setting the melting point to be equal to or more than the above lower limit, the mold release properties tend to be further improved. When two or more melting peaks are observed, the lower temperature is taken as the melting point (Tm-2nd).

The polyethylene terephthalate resin used in the present embodiment preferably has an absolute value of the heat of crystallization ($\Delta H_{Tc1}$-1st) during the heating phase in the first cycle of less than 3 J/g and an absolute value of the heat of crystallization ($\Delta H_{Tc2}$-1st) during the cooling phase in the first cycle of 3 J/g or more. That is, it is preferred that a clear crystallization temperature during the heating phase (Tc1-1st) is not exhibited and that there is a clear crystallization temperature during the cooling phase (Tc2-1st). By using such a polyethylene terephthalate resin, the effects of improved mold release properties and improved surface appearance can be exhibited better.

In addition, the polyethylene terephthalate resin used in the present embodiment preferably has an absolute value of the heat of crystallization ($\Delta H_{Tc1}$-2nd) during the heating phase in the second cycle of less than 3 J/g and an absolute value of the heat of crystallization ($\Delta H_{Tc2}$-2nd) during the cooling phase in the second cycle of 3 J/g or more. That is, it is preferred that a clear crystallization temperature during the heating phase (Tc1-2nd) is not exhibited in the second cycle, and that there is a clear crystallization temperature during the cooling phase (Tc2-2nd) in the second cycle. By using such a polyethylene terephthalate resin, the effects of improved mold release properties and improved surface appearance can be exhibited better.

As such a polyethylene terephthalate resin, recycled PET, in particular recycled PET derived from PET bottles, is preferred.

On the other hand, a general polyethylene terephthalate resin (for example, virgin polyethylene terephthalate resin) exhibits a clear crystallization temperature (Tc1-1st) during the heating phase in the first cycle, and the absolute value of the heat of crystallization ($\Delta H_{Tc1}$-1st) is 3 J/g or more. Further, while a general polyethylene terephthalate resin tends to exhibit a clear crystallization temperature (Tc1-2nd) during the heating phase in the second cycle, recycled polyethylene terephthalate does not tend to do so. In addition, while a general polyethylene terephthalate resin tends not to exhibit a clear crystallization temperature (Tc2-1st) during the cooling phase in the first cycle, a recycled polyethylene terephthalate resin does tend to do so. Moreover, while a general polyethylene terephthalate resin does not tend to exhibit a clear crystallization temperature (Tc2-2nd) during the cooling phase in the second cycle, a recycled polyethylene terephthalate tends to do so.

The resin composition of this embodiment preferably contains a polyethylene terephthalate resin having 0.5 mol% or more and 15.0 mol% or less of a unit derived from an isophthalic acid (hereinafter, sometimes referred to as "isophthalic acid unit") with respect to all units derived from a dicarboxylic acid component. By using such a specific polyethylene terephthalate resin, crystallization as a whole can be suppressed, and as a result a molded article having a smaller molding shrinkage rate, less sticking to the mold, and higher mold release properties tends to be obtained.

The proportion of the isophthalic acid unit is, of all units derived from the dicarboxylic acid component, preferably 0.7 mol% or more, more preferably 0.9 mol% or more, further preferably 1.1 mol% or more, still further preferably 1.3 mol% or more, and still further preferably 1.5 mol% or more. By setting the proportion to be equal to or more than the above lower limit, the molding shrinkage rate tends to be smaller, there tends to be less sticking to the mold, and the mold release properties tend to be improved. Further, the proportion of the isophthalic acid unit is, of all units derived from the dicarboxylic acid component, 10.0 mol% or less, 8.0 mol% or less, 5.0 mol% or less, 4.0 mol% or less, preferably 3.5 mol% or less, more preferably 3.0 mol% or less, further preferably 2.5 mol% or less, still further preferably 2.3 mol% or less, and still further preferably 2.0 mol % or less. By setting the proportion to be equal to or less than the above upper limit, the rigidity and bending strength of the molded product tend to be increased.

The intrinsic viscosity of the polyethylene terephthalate resin is preferably 0.50 dL/g or more, more preferably 0.60 dL/g or more, further preferably 0.63 dL/g or more, and still further preferably more than 0.70 dL/g, still further preferably 0.73 dL/g or more, still further preferably more than 0.76 dL/g, particularly preferably 0.78 dL/g or more, and further particularly preferably 0.80 dL/g or more. By setting the intrinsic viscosity to be equal to or more than the above lower limit, the elongation of the resin itself tends to be improved, the shrinkage rate of the molded product obtained tends to be reduced, and the impact resistance tends to be improved. The reason for this is inferred to be due to the fact that as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.95 dL/g or less, and still further preferably 0.85 dL/g or less. By setting the intrinsic viscosity to be equal to or less than the above upper limit, the load on the extruder and molding machine tends to be reduced without the melt viscosity during melt-kneading and molding becoming too high.

When the resin composition of this embodiment contains two or more types of polyethylene terephthalate resins, the intrinsic viscosity is the intrinsic viscosity of the mixture.

In particular, in the resin composition of this embodiment, when the polyethylene terephthalate resin contains

**EP 4 442 762 A1**

a unit derived from an isophthalic acid, and the unit derived from the isophthalic acid is 0.5 mol% or more and 15.0 mol% or less of all units derived from a dicarboxylic acid component contained in the polyethylene terephthalate resin, and has an intrinsic viscosity of is 0.60 dL/g or more (preferably more than 0.70 dL/g), it tends to be possible to more effectively achieve a low molded article shrinkage rate, and impact resistance tends to be more improved.

The melt volume rate (MVR) of the polyethylene terephthalate resin measured in accordance with JIS K7210 (temperature 265°C, load 5 kgf) is 10 $cm^3$/10 minutes or more, and more preferably 20 $cm^3$/10 minutes or more, and is preferably 150 $cm^3$/10 minutes or less, and more preferably 100 $cm^3$/10 minutes or less.

Examples of acid components other than the terephthalic acid and the isophthalic acid in the polyethylene terephthalate resin used in this embodiment include dicarboxylic acids and derivatives thereof such as naphthalene dicarboxylic acid, 4,4'-diphenylsulfonedicarboxylic acid, 4,4'-biphenyldicarboxylic acid, 1,4-cyclohexanedicarboxylic acid, 1,3-phenylenedioxydiacetic acid, structural isomers of these, malonic acid, succinic acid, and adipic acid, and oxyacids and derivatives thereof such as such as p-hydroxybenzoic acid and glycolic acid.

In the polyethylene terephthalate resin used in this embodiment, the terephthalic acid unit and the isophthalic acid unit preferably account for, of all the dicarboxylic acid units, 80 mol% or more, more preferably 95 mol% or more, further preferably 98 mol% or more, and still further preferably 99 mol% or more.

Examples of a diol component other than ethylene glycol in the polyethylene terephthalate resin used in this embodiment include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S, and the like.

In the polyethylene terephthalate resin used in this embodiment, the ethylene glycol unit preferably accounts for, of all the diol units, 80 mol% or more, more preferably 95 mol% or more, further preferably 98 mol% or more, and still further preferably 99 mol% or more.

The polyethylene terephthalate resin may be obtained by copolymerizing with, for example, 1.0 mol% or less, preferably 0.5 mol% or less, and more preferably 0.3 mol% or less, of a branching component, for example, an acid capable of forming a trifunctional ester, such as tricarballylic acid, trimellisic acid, or trimellitic acid, or a tetrafunctional ester, such as pyromellitic acid, or an alcohol capable of forming a trifunctional or tetrafunctional ester, such as glycerin, trimethylolpropane, or pentaerythritol.

In the polyethylene terephthalate resin used in this embodiment, the terephthalic acid unit, the isophthalic acid unit, and the ethylene glycol unit preferably account for, of all the units excluding the terminals, 90 mol% or more, more preferably 95 mol% or more, further preferably 98 mol% or more, and still further preferably 99 mol% or more.

The terminal carboxyl group content of the polyethylene terephthalate resin may be appropriately selected and determined, but the terminal carboxyl group content usually 60 eq/ton or less, preferably 50 eq/ton or less, and more preferably 45 eq/ton or less. The terminal carboxyl group concentration of the polyethylene terephthalate resin is a value determined by dissolving 0.5 g of the polyethylene terephthalate resin in 25 mL of benzyl alcohol, and titrating the resultant solution using a 0.01 mol/L solution of sodium hydroxide in benzyl alcohol.

The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

As the polyethylene terephthalate resin used in this embodiment, it is preferred to use recycled PET, in particular recycled PET derived from PET bottles, because the fogging resistance, appearance, and grain transferability of a molded article obtained by molding the resin composition of this embodiment are improved.

This is inferred to be due to the fact that although polyethylene terephthalate resins usually contain linear oligomers and cyclic oligomers, and the main components are cyclic trimers, cyclic tetramers, and cyclic pentamers, in the case of recycled PET, during the recycling process, the amount of these cyclic oligomers decreases. Further, this is also inferred to be due to the fact that, in particular for recycled PET derived from bottles, as described above, the PET undergoes a heat treatment step in crystallization, solid phase polymerization, or the like during the recycling process, and so the amount of cyclic oligomers tends to further decrease.

The recycled PET such as recycled PET derived from PET bottles preferably has a total amount of cyclic oligomers (cyclic trimers, cyclic tetramers, cyclic pentamers) of 1.1% by mass or less, more preferably 0.9% by mass or less, and particularly preferably 0.7% by mass or less. Although the lower limit is not particularly limited, 0.1% by mass or more is realistic.

Further, the cyclic trimer content in the recycled PET is preferably 0.8% by mass or less, more preferably 0.6% by mass or less, and particularly preferably 0.5% by mass or less. Although the lower limit is not particularly limited, 0.1% by mass or more is realistic.

By setting the content to be equal to or less than the above upper limit, the amount of outgases during molding is suppressed and the appearance of the molded article is improved.

The cyclic oligomer content is obtained by dissolving 0.1 g of the polyethylene terephthalate resin in a soluble solvent such as chloroform, dissolving and reprecipitating, filtering the supernatant liquid, and then measuring by high performance liquid chromatography (HPLC). Quantification was carried out by a single-point absolute calibration curve method, and the value was expressed in terms of DMT (dimethyl terephthalate).

Recycled PET such as recycled PET derived from PET bottles may contain metal elements as impurities. Examples of the metal elements include iron, calcium, sodium, titanium, and the like. It is inferred that metal elements such as iron, calcium, sodium, and titanium act as crystal nucleating agents in the resin composition of this embodiment, and contribute to improving the mold release properties of the molded article obtained by molding the resin composition.

Such recycled PET contains elemental iron in an amount of, for example, 0.2 $\mu$g/g or more, 0.6 $\mu$g/g or more, 0.8 $\mu$g/g or more, or even 1.6 $\mu$g/g or more. An upper limit is realistically, for example, 20 $\mu$g/g or less.

The recycled PET contains preferably 0.8 $\mu$g/g or more of elemental iron, more preferably 1.2 $\mu$g/g or more, further preferably 1.6 $\mu$g/g or more, and still further preferably 2.0 $\mu$g/g or more. By setting the content to be equal to or more than the above lower limit, the mold release properties during molding tend to be improved. Further, the recycled PET contains preferably 50 $\mu$g/g or less of elemental iron, more preferably 20 $\mu$m/g or less, further preferably 10 $\mu$g/g or less, and still further preferably 5 $\mu$g/g or less. By setting the content to be equal to or less than the above upper limit, the insulation properties of the molded article tend to be improved, and also the appearance tends to be improved.

Such recycled PET may contain, for example, 0.4 $\mu$g/g or more of elemental calcium, 0.8 $\mu$g/g or more, 1.5 $\mu$g/g or more, or even 2.0 $\mu$g/g or more. A realistic upper limit is, for example, 300 $\mu$g/g or less.

Such recycled PET may contain, for example, 0.4 $\mu$g/g or more of elemental sodium, 0.6 $\mu$g/g or more, 1.2 $\mu$g/g or more, or even 1.6 $\mu$g/g or more. A realistic upper limit is, for example, 20 $\mu$g/g or less.

Such recycled PET may contain, for example, 0.4 $\mu$g/g or more of elemental titanium, 0.6 $\mu$g/g or more, 1.2 $\mu$g/g or more, or even 1.6 $\mu$g/g or more. A realistic upper limit is, for example, 20 $\mu$g/g or less.

The qualitative/semi-quantitative analysis ($\mu$g/g) of the metal elements in the recycled PET is performed by ICP emission spectrometry. In this case, as a pretreatment, 200 mg of a sample is weighed, the sample is subjected to Kjeldahl wet digestion (sulfuric acid/nitric acid, sulfuric acid/hydrogen peroxide), the volume is adjusted to 50 mL, and then ICP emission analysis is conducted by an acid concentration matching one-point calibration method. The ICP emission analysis can be carried out by axial/radial photometry using an "iCAP76000uo" manufactured by Thermo Fisher Scientific.

The content of the polyethylene terephthalate resin in the resin composition of this embodiment is, of the resin composition, preferably 40% by mass or more, more preferably 42% by mass or more, further preferably 43% by mass or more, still further preferably 45% by mass or more, and still further preferably 48% by mass or more. By setting the content to be equal to or more than the above lower limit, the grain transferability of the resin and the appearance of the molded product tend to be improved. Further, the content of the polyethylene terephthalate resin in the resin composition of this embodiment is, of the resin composition, preferably 60% by mass or less, more preferably 57% by mass or less, further preferably 54% by mass or less, and still further preferably 50% by mass or less. By setting the content to be equal to or less than the above upper limit, the impact resistance tends to be further improved.

The resin composition of this embodiment may contain only one type, or two or more types, of the polyethylene terephthalate resin, respectively. When two or more types are included, the total amount is preferably within the ranges described above.

The resin composition of this embodiment may or may not contain a polyester resin other than polyethylene terephthalate resin, and further a polybutylene terephthalate resin. The content of the polybutylene terephthalate resin in this embodiment, and further, the content of the polyester resin other than the polyethylene terephthalate resin, is less than 10% by mass of the content of polyethylene terephthalate resin contained in the resin composition, and more preferably 9% by mass or less. Further, when the resin composition of this embodiment contains a polybutylene terephthalate resin, the lower limit of the content thereof is preferably 1% by mass or more.

Further, in the resin composition of this embodiment, the content of the polyethylene terephthalate resin is, of a thermoplastic resin component contained in the resin composition, preferably more than 90% by mass, and more preferably 95% by mass or more, and is 100% by mass or less.

Examples of the thermoplastic resin component include the polyethylene terephthalate resin, and optionally-added polyester resins other than the polyethylene terephthalate resin and thermoplastic resins other than the polyester resins, such as a polycarbonate resin and a styrene resin.

<Inorganic filler>

The resin composition of this embodiment further contains an inorganic filler in a proportion of 40% by mass or more in the resin composition. By including the fibrous inorganic filler, the mechanical strength of the molded article obtained can be improved, and the molding shrinkage rate can also be effectively reduced.

The inorganic filler may be a fibrous inorganic filler or a non-fibrous inorganic filler, but is preferably a fibrous inorganic filler.

The fibrous inorganic filler may be short fibers or long fibers.

Examples of the raw material of the fibrous inorganic filler include inorganic materials such as glass, carbon (carbon fiber, etc.), alumina, boron, ceramic, metal (steel, etc.), as well as organic substances such as plants (including Kenaf, bamboo, etc.), aramid, polyoxymethylene, aromatic polyamide, polyparaphenylene benzobisoxazole, and ultra-high molecular weight polyethylene, and glass is preferred.

The resin composition of the present embodiment preferably contains glass fiber as the fibrous inorganic filler.

The glass fiber is selected from glass compositions such as A-glass, C-glass, E-glass, R-glass, D-glass, M-glass, and S-glass, and E-glass (alkali-free glass) is particularly preferred.

Glass fiber refers to a fibrous material that has a perfect circular or polygonal cross-sectional shape when cut at right angles to the length direction. The glass fiber has a single fiber number average fiber diameter of usually from 1 to 25 $\mu$m, and preferably 5 to 17 $\mu$m. By setting the number average fiber diameter to be equal to or more than 1 $\mu$m, the moldability of the resin composition tends to be further improved. By setting the number average fiber diameter to be equal to or less than 25 $\mu$m, the appearance of the obtained structure tends to improve and a reinforcement effect also tends to improve. The glass fiber may be a single fiber or a plurality of twisted single fibers.

The form of the glass fiber may be any of glass roving, which is made by continuously winding a single fiber or a plurality of twisted-together strands, chopped strands cut to a length of from 1 to 10 mm (i.e., glass fiber having a number average fiber length of from 1 to 10 mm), and milled fiber that has been crushed to a length of about 10 to 500 $\mu$m (i.e., glass fiber having a number average fiber length of from 10 to 500 $\mu$m), but chopped strands having a length of from 1 to 10 mm are preferred. Glass fibers having different shapes can also be used together.

A glass fiber having an irregular cross-sectional shape is also preferred. This irregular cross-sectional shape means that the oblateness, which is represented by the major axis/minor axis ratio of a cross section perpendicular to the length direction of the fiber, is, for example, from 1.5 to 10, and of that, preferably from 2.5 to 10, further preferably from 2.5 to 8, and particularly from 2.5 to 5.

To improve affinity with the resin component, the glass fiber may be surface-treated with, for example, a silane compound, an epoxy compound, a urethane compound, and the like, or have been oxidized, as long as the properties of the resin composition of this embodiment are not significantly impaired.

The inorganic filler may be a non-fibrous inorganic filler. By including the non-fibrous inorganic filler, rigidity and heat resistance are improved, and there is an effect of reducing anisotropy in shrinkage during molding.

Here, non-fibrous inorganic filler refers to an inorganic filler in a shape other than fibers, which is preferably a platelike inorganic filler or a particulate inorganic filler, and more preferably a particulate inorganic filler.

Examples of the non-fibrous inorganic filler include calcium carbonate, talc, mica, silica, kaolin, wollastonite, barium sulfate, zirconium silicate, clay, bentonite, hydrotalcite, calcium sulfate, barium carbonate, magnesium carbonate, magnesium sulfate, calcium silicate, alumina, glass beads, glass flakes, titanium oxide, zinc oxide, magnesium oxide, calcium titanate, magnesium titanate, barium titanate, and the like, but calcium carbonate, talc, mica, silica, kaolin, barium sulfate, and zirconium silicate are preferred, calcium carbonate or talc is more preferred, and calcium carbonate is particularly preferred.

Further, it is preferred that the surface of the non-fibrous inorganic filler used in the present embodiment has been treated with an acid, and more preferably the surface has been treated with a fatty acid.

Examples of the acid used in the acid treatment include a fatty acid, a rosin acid, and a lignic acid, and a saturated or an unsaturated fatty acid having from 6 to 20 carbon atoms is preferred. Examples of the saturated or the unsaturated fatty acid having from 6 to 20 carbon atoms include stearic acid, palmitic acid, lauric acid, oleic acid, linoleic acid, and the like.

The non-fibrous inorganic filler used in the present embodiment preferably has a volume-based average particle size of 5 $\mu$m or less, more preferably 3 $\mu$m or less, further preferably 1 $\mu$m or less, still further preferably 0.8 $\mu$m or less, still further preferably 0.5 $\mu$m or less, and particularly preferably 0.3 $\mu$m or less. The lower limit of the volume-based average particle size is preferably 0.01 $\mu$m or more, and more preferably 0.08 $\mu$m or more. The volume-based average particle size in the present embodiment is calculated based on a specific surface area analyzed from a gas adsorption isotherm based on the assumption that the particle shape is a sphere.

Even when the non-fibrous inorganic filler is other than particulate, the particle size in the present embodiment is based on the assumption that the particles have the same volume.

The content of the inorganic filler (preferably a fibrous inorganic filler) in the resin composition of this embodiment is, of the resin composition, 40% by mass or more, preferably 41% by mass or more, more preferably 42% by mass or more, further preferably 43% by mass or more. By setting the content to be equal to or more than the above lower limit, the impact resistance and strength of the resin composition tend to be further improved. Further, the content of the inorganic filler (preferably a fibrous inorganic filler) in the resin composition of this embodiment is, of the resin composition, preferably 60% by mass or less, more preferably 55% by mass or less, further preferably 50% by mass or less, still further preferably 48% by mass or less, and still further preferably 47% by mass or less. By setting the content to be equal to or less than the above upper limit, the anisotropy of the elongation and shrinkage rate of the resin composition tend to be further improved, and moldability tends to be further improved.

The resin composition of the present embodiment may contain only one type of the inorganic filler, or may contain two or more types of the non-fibrous inorganic filler. When two or more types are included, the total amount is preferably within the ranges described above.

<Other components>

The resin composition of the present embodiment may optionally include other components in addition to those described above, as long as the various desired physical properties are not significantly impaired. Examples of the other components include thermoplastic resins other than the polyethylene terephthalate resin, such as a polyester resins and a styrene-based resin, various resin additives, and the like. In addition, the resin composition may contain one type of such other components, or contain two or more types in any combination and ratio.

Examples of resin additives include a mold release agent, a stabilizer (thermal stabilizer, light stabilizer), a colorant (pigment, dye), a reactive compound, a nucleating agent, a flame retardant, flame retardant aid, a filler, an antistatic agent, an antifogging agent, an antiblocking agent, a fluidity improver, a plasticizer, a dispersant, an antibacterial agent, and the like.

In the resin composition of the present embodiment, the total amount of the polyethylene terephthalate resin, the inorganic filler, and optionally-added components is 100% by mass.

<<Styrene-based resin>>

The resin composition of the present embodiment may include a styrene-based resin.

Examples of the styrene-based resin include a homopolymer of a styrene-based monomer, a copolymer of a styrene-based monomer and a monomer copolymerizable with the styrene-based monomer, and the like. Examples of the styrene-based monomer include styrene, $\alpha$-methylstyrene, chlorostyrene, methylstyrene, and tert-butylstyrene. In the styrene-based resin in the present embodiment, 50 mol% or more of the monomer units are a styrene-based monomer.

More specifically, examples of the styrene-based resin include resins such as polystyrene resin, an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylenepropylene rubber-styrene copolymer (AES resin), and a styrene-IPN type rubber copolymer.

In the present embodiment, the styrene-based resin is preferably an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), or an acrylonitrile-ethylenepropylene rubber-styrene copolymer (AES resin), and more preferably is an acrylonitrile-styrene copolymer (AS resin).

The content of the styrene monomer in the acrylonitrile-styrene copolymer (AS resin) is preferably from 50 to 95% by mass, and more preferably from 65 to 92% by mass.

The weight average molecular weight of the styrene-based resin is usually 50,000 or more, preferably 100,000 or more, and more preferably 150,000 or more, and usually 500,000 or less, preferably is 400,000 or less, and more preferably 300,000 or less. Further, the number average molecular weight is usually 10,000 or more, preferably 30,000 or more, and more preferably 50,000 or more, and preferably 500,000 or less, and more preferably 300,000 or less.

The melt flow rate (MFR) of the styrene-based resin measured in accordance with JIS K7210 (temperature 200°C, load 5 kgf) is preferably from 0.1 to 30 g/10 minutes, and more preferably from 0.5 to 25 g/10 minutes. When the MFR is 0.1 g/10 minutes or more, fluidity tends to improve, and when the MFR is 30 g/10 minutes or less, impact resistance tends to improve.

Examples of a method for producing such a styrene-based resin include known methods, such as emulsion polymerization, solution polymerization, suspension polymerization, and bulk polymerization.

Details regarding the styrene-based resin may be found in the descriptions in paragraphs 0061 to 0069 of Japanese Patent Laid-Open No. 2017-052925 A and the descriptions in paragraphs 0021 to 0031 and paragraphs 0057 to 0064 of Japanese Patent Laid-Open No. 2017-052262 A, the contents of which are incorporated herein by reference.

When the resin composition of the present embodiment includes a styrene-based resin, the content thereof is, with respect to a total of 100 parts by mass of the polybutylene terephthalate resin and the polyethylene terephthalate resin, preferably 0.1 parts by mass or more, more preferably 0.5 parts by mass or more, further preferably 1.0 parts by mass or more, still further preferably 2.0 parts by mass or more, and still further preferably 3.0 parts by mass or more. By setting the content to be equal to or more than the above lower limit, the effects of reducing the shrinkage rate and suppressing appearance defects tend to be further improved. Further, the upper limit of the content of the styrene-based resin is, with respect to the total of 100 parts by mass of the polybutylene terephthalate resin and the polyethylene terephthalate resin, preferably 20.0 parts by mass or less, more preferably 15.0 parts by mass or less, further preferably 10.0 parts by mass or less, still further preferably 8.0 parts by mass or less, and still further preferably 6.0 parts by mass or less. By setting the content to be equal to or less than the above upper limit, the effect of suppressing a decrease in weld strength and impact strength tends to be further improved.

The resin composition of the present embodiment may contain only one type of the styrene-based resin, or may contain two or more types of the styrene-based resin. When the resin composition contains two or more types, the total amount is preferably within the ranges described above.

«Mold release agent»

The resin composition of the present embodiment may include a mold release agent. Examples of the mold release agent include a montanic acid ester wax, a polyolefin wax, a higher fatty acid, an ester compound, ethylene bisstearoamide, and the like, and it is preferred to select at least one from a montanic acid ester wax, a polyolefin wax, and ethylene bisstearoamide.

Specific details regarding the mold release agent may be found in the descriptions in paragraphs 0063 to 0077 of Japanese Patent Laid-Open No. 2018-070722 A and the descriptions in paragraphs 0090 to 0098 of Japanese Patent Laid-Open No. 2019-123809 A, the contents of which are incorporated herein by reference.

The acid value of the mold release agent used in this embodiment is preferably 30 mg KOH/g or less, and preferably 0 mg KOH/g.

The acid value is measured in accordance with JIS K 0070-1992.

When the resin composition of this embodiment contains a mold release agent, the content thereof is, with respect to 100 parts by mass of the polyethylene terephthalate resin, preferably 0.01 parts by mass or more, more preferably 0.08 parts by mass or more, and further preferably 0.3 parts by mass or more. Further, the upper limit of the content of the mold release agent is, with respect to 100 parts by mass of the polyethylene terephthalate resin, preferably 5.0 parts by mass or less, and more preferably 1.0 parts by mass or less.

The resin composition of the present embodiment may contain only one type of the mold release agent, or may contain two or more types of the mold release agent. When the resin composition contains two or more types, the total amount is preferably within the ranges described above.

«Stabilizer»

The resin composition of the present embodiment may include a stabilizer (light stabilizer and/or heat stabilizer).

Examples of the stabilizer include a hindered phenol compound, a hindered amine compound, a phosphorus compound, a sulfur stabilizer, and the like. Among these, a hindered phenol compound and/or a phosphorus compound is preferred.

Specific details regarding the stabilizer may be found in the description in paragraphs 0067 to 0075 of Japanese Patent Laid-Open No. 2021-063196 A, the descriptions in paragraphs 0046 to 0057 of Japanese Patent Laid-Open No. 2018-070722 A, the descriptions in paragraphs 0030 to 0037 of Japanese Patent Laid-Open No. 2019-056035 A, and the descriptions in paragraphs 0066 to 0078 of International Publication No. WO 2017/038949, the contents of which are incorporated herein by reference.

When the resin composition of this embodiment contains a stabilizer, the content thereof is, with respect to 100 parts by mass of the polyethylene terephthalate resin, preferably 0.01 parts by mass or more, more preferably 0.05 parts by mass or more, and further preferably 0.3 parts by mass or more. By setting the content to be equal to or more than the above lower limit, there tends to be an improvement in the effect of suppressing thermal deterioration and oxidative deterioration of the resin during melt-kneading, molding, and use as a molded article. Further, the upper limit of the content of the stabilizer is, with respect to 100 parts by mass of the polyethylene terephthalate resin, preferably 2.0 parts by mass or less, and more preferably 1.5 parts by mass or less. By setting the content to be equal to or less than the above upper limit, it is possible to effectively suppress adverse effects on appearance and physical properties caused by the aggregation of additives such as the stabilizer.

The resin composition of the present embodiment may contain only one type of the stabilizer, or may contain two or more types of the stabilizer. When the resin composition contains two or more types, the total amount is preferably within the ranges described above.

«Colorant»

The resin composition of the present embodiment may include a colorant (dye and/or pigment) . The colorant may be a dye or a pigment, but a pigment is preferred.

The colorant may be either an organic colorant or an inorganic colorant. Further, the colorant may be either a chromatic colorant or an achromatic colorant.

Examples of the colorant include the descriptions in paragraphs 0121 to 0123 of Japanese Patent Laid-Open No. 2021-101020 A and the descriptions in paragraphs 0088 to 0090 of Japanese Patent Laid-Open No. 2019-188393 A, the contents of which are incorporated herein by reference.

The resin composition of the present embodiment preferably contains carbon black. There are no restrictions on the type, raw material, or production method of the carbon black, and any of furnace black, channel black, acetylene black, Ketjen black, and the like can be used. Among these, furnace black is preferred.

The carbon black preferably has a DBP oil absorption amount (unit: $cm^3/100\,g$) of from 40 to 300 $cm^3/100\,g$. The upper limit is more preferably 200 $cm^3/100\,g$ or less, further preferably 150 $cm^3/100\,g$ or less, and may be 100 $cm^3/100\,g$ or less. Further, the lower limit is more preferably 50 $cm^3/100\,g$ or more, and further preferably 60 $cm^3/100\,g$ or more. By setting the DBP oil absorption amount to within the above upper and lower limits, the change in color tone ($\Delta E^*$) before and after a weathering test tends to be small. The DBP absorption amount (unit: $cm^3/100\,g$) can be measured in accordance with JIS K6217.

The carbon black preferably has a number average particle size (unit: nm) of from 10 to 60 nm. The upper limit is preferably 60 nm or less, more preferably 40 nm or less, further preferably 30 nm or less, and still further preferably 25 nm or less. The lower limit is preferably 10 nm or more, more preferably 13 nm or more, further preferably 16 nm or more, and still further preferably 19 nm or more. By setting the DBP oil absorption amount to within the above upper and lower limits, the change in color tone ($\Delta E^*$) before and after a weathering test tends to be small, the dispersibility of carbon black tends to be increased, and the mechanical strength of the molded product tends to be further improved. The number average particle size can be determined by acquiring an enlarged aggregate image according to the procedure described in the ASTM D3849 standard (Standard test method for carbon black - Morphological characterization by electron microscopy), measuring the particle size of 3,000 particles from this aggregate image, and taking the arithmetic average thereof.

It is preferred to blend the carbon black as a masterbatch in advance by mixing with a thermoplastic resin, preferably a polyester resin, more preferably a polybutylene terephthalate resin and/or a polyethylene terephthalate resin, and further preferably a polyethylene terephthalate resin, because the mechanical strength of the molded article tends to be improved and the weather resistance tends to be improved.

When the resin composition of the present embodiment includes a colorant, the content thereof is, with respect to 100 parts by mass of the polyethylene terephthalate resin, preferably 0.01 parts by mass or more, more preferably 0.05 parts by mass or more, and further preferably 0.1 parts by mass or more. By setting the content to be equal to or more than the above lower limit, the coloring effect can be more effectively exhibited. Further, the upper limit of the content of the colorant is, with respect to 100 parts by mass of the polyethylene terephthalate resin, preferably 6 parts by mass or less, more preferably 4 parts by mass or less, further preferably 3 parts by mass or less, still further preferably 2 parts by mass or less, and still further preferably 1 part by mass or less. By setting the content to be equal to or less than the above upper limit, the mechanical strength of the molded article obtained tends to be further improved.

When the resin composition of the first embodiment includes carbon black, the content thereof is, with respect to 100 parts by mass of the polyethylene terephthalate resin, preferably 0.01 parts by mass or more, more preferably 0.05 parts by mass or more, further preferably 0.1 parts by mass or more, still further preferably 0.5 parts by mass or more, still further preferably 1 part by mass or more, and may be 2 parts by mass or more or 3 parts by mass or more. By setting the content to be equal to or more than the above lower limit, the coloring effect tend to be more effectively exhibited, and the mold release properties during molding tend to be improved. Further, the upper limit of the content of the colorant is, with respect to 100 parts by mass of the polyethylene terephthalate resin, preferably 6 parts by mass or less, more preferably 5 parts by mass or less, further preferably 4 parts by mass or less, and still further preferably 3 parts by mass or less. By setting the content to be equal to or less than the above upper limit, the mechanical strength of the molded article obtained tends to be further improved, and a difference in color tone before and after a weathering test tends to be smaller.

The resin composition of the present embodiment may contain only one type of colorant, or may contain two or more types of colorant. When the resin composition contains two or more types, the total amount is preferably within the ranges described above.

<<Reactive compound>>

The resin composition of the present embodiment may include a reactive compound. The reactive compound is preferably one or more types selected from the group consisting of a carbodiimide compound, an epoxy compound, a compound having an oxazoline group (ring), a compound having an oxazine group (ring), a compound having a carboxylic acid, and a compound having an amide group. An epoxy compound is particularly preferred because the mechanical strength of the molded article tends to be improved.

The epoxy compound may be a monofunctional epoxy compound or a polyfunctional epoxy compound, but a polyfunctional epoxy compound is preferred. Examples of the polyfunctional epoxy compound include a bisphenol A type epoxy compound, a bisphenol F type epoxy compound, a resorcin type epoxy compound, a novolak type epoxy compound, an alicyclic compound type diepoxy compound, a glycidyl ether, and epoxidized polybutadiene. More specifically, any alicyclic compound type epoxy compound, such as a bisphenol A type epoxy compound, a bisphenol F type epoxy compound, a resorcin type epoxy compound, a novolak type epoxy compound, vinylcyclohexene dioxide, and dicyclopentadiene oxide, can be preferably used. Among these, a novolak type epoxy compound or a bisphenol A type epoxy compound is preferred, and a bisphenol A type epoxy compound is more preferred because the mechanical strength and moist heat resistance of the molded article are improved.

When the resin composition of this embodiment contains an epoxy compound, from the viewpoint of fluidity and the mechanical strength of the molded product, the epoxy equivalent thereof is preferably from 1 to 1000 g/eq, more preferably from 50 to 800 g/eq, further preferably from 100 to 500 g/eq, and still further preferably from 150 to 300 g/eq. Setting the epoxy equivalent in the above ranges is preferred because the mechanical strength of the molded article is improved, and the heat moisture resistance is improved.

When the resin composition of this embodiment contains an epoxy compound, the number average molecular weight (Mn) thereof is, from the viewpoint of fluidity, preferably from 100 to 10,000, more preferably from 200 to 5,000, and still further from 300 to 1,000. Setting the number average molecular weight (Mn) in the above ranges is preferred because the fluidity of the composition is improved and the mechanical strength of the molded article is improved.

Further, the epoxy compound may be a copolymer having a glycidyl group-containing compound as a component for the constitution. Examples thereof may include a copolymer of a glycidyl ester of an $\alpha,\beta$-unsaturated acid with one or more monomers selected from the group consisting of an $\alpha$-olefin, an acrylic acid, an acrylic ester, a methacrylic acid, a methacrylic ester, and styrene.

Other than the above, details regarding the reactive compound may be found in the descriptions in paragraphs 0038 to 0050 of Japanese Patent Laid-Open No. 2020-199755 A and paragraph 0043 of Japanese Patent Laid-Open No. 2020-125468 A, the contents of which are incorporated herein by reference.

When the resin composition of this embodiment contains a reactive compound (preferably an epoxy compound), the content thereof is, with respect to 100 parts by mass of the polyethylene terephthalate resin, preferably 0.01 parts by mass or more, more preferably 0.05 parts by mass or more, further preferably 0.1 parts by mass or more, still further preferably 0.3 parts by mass or more, particularly preferably 0.5 parts by mass or more, and may be 0.7 parts by mass. By setting the content to be equal to or more than the above lower limit, the polyethylene terephthalate resin and the reactive compound react with each other, and as a result the mechanical strength of the molded product tends to be further improved. Further, the upper limit of the content of the reactive compound (preferably an epoxy compound) is, with respect to 100 parts by mass of the polyethylene terephthalate resin, preferably 10.0 parts by mass or less, more preferably 7.0 parts by mass or less, further preferably 4.0 parts by mass or less, still further preferably 2.0 parts by mass or less, and particularly preferably 1.0 parts by mass or less. By setting the content to be equal to or less than the above upper limit, discoloration before and after a weather test tends to be reduced, and thickening of the composition tends to be suppressed.

The resin composition of the present embodiment may contain only one type of the reactive compound, or may contain two or more types of the reactive compound. When the resin composition contains two or more types, the total amount is preferably within the ranges described above.

«Nucleating agent»

The resin composition of this embodiment may contain a nucleating agent in order to adjust the crystallization rate. The type of nucleating agent is not particularly limited, it may be an inorganic nucleating agent or an organic nucleating agent, but an organic nucleating agents is more preferred.

Examples of the inorganic nucleating agent include talc, boron nitride, mica, kaolin, barium sulfate, sodium phosphate, silicon nitride, and molybdenum disulfide. Among these, talc, barium sulfate, sodium phosphate, and boron nitride are preferred, and talc is more preferred because the rigidity of the resin composition tends to be increased.

The organic nucleating agent is preferably an organic alkali metal salt, more preferably an alkali metal salt of an aromatic carboxylic acid or fatty acid, and further preferably an alkali metal salt (preferably a sodium salt or a potassium salt, and more preferably a sodium salt) of a fatty acid (preferably a fatty acid having from 5 to 50 carbon atoms). Specific examples of the organic nucleating agent include an ionomer, sodium benzoate, sodium palmitate, sodium stearate, sodium behenate, and sodium montanite. Among those, sodium stearate, sodium behenate, and sodium montanate are preferred, and sodium montanate is more preferred because the resin composition tends to have a good balance between rigidity and toughness.

The acid value of the nucleating agent used in this embodiment is preferably 10 mg KOH/g or less, and preferably 0 mg KOH/g or more

The acid value is measured in accordance with JIS K 0070-1992.

When the resin composition of this embodiment contains a nucleating agent, the content thereof is, with respect to 100 parts by mass of the polyethylene terephthalate resin, preferably 0.01 parts by mass or more, more preferably 0.05 parts by mass or more, further preferably 0.1 part by mass or more, and depending on the use, for example, a use where mold release properties are particularly required, the content is still further preferably 0.15 part by mass or more, and may be 0.2 parts by mass or more. By setting the content to be equal to or more than the above lower limit, the mold release properties and mechanical strength of the molded product tend to be improved.

The upper limit of the content is, with respect to 100 parts by mass of the polyethylene terephthalate resin, preferably 10 parts by mass or less, more preferably 8 parts by mass or less, further preferably 6 parts by mass or less, still further preferably 4 parts by mass or less, more preferably 3 parts by mass or less, still further preferably 1 part by mass or less, still further preferably 0.8 parts by mass, and depending on the use, for example, a use where a small molding shrinkage rate is required, the content is further preferably 0.6 parts by mass or less, and further, may be even be 0.5 parts by mass or less, 0.4 parts by mass or less, or 0.3 parts by mass or less. By setting the content to be equal to or less than the above upper limit, decomposition of the composition is suppressed, and so mechanical strength tends to be improved. In addition, the strength retention rate after the wet heat test tends to be higher.

When the resin composition of this embodiment contains an alkali metal salt of a fatty acid (preferably sodium montanate), the content thereof is preferably 0.01 parts by mass or more, more preferably 0.05 parts by mass or more, further preferably 0.1 part by mass or more, and depending on the use, for example, a use where mold release properties are particularly required, the content is still further preferably 0.15 part by mass or more, and may be 0.2 parts by mass or more. By setting the content to be equal to or more than the above lower limit, the mold release properties and mechanical strength of the molded product tend to be improved. The upper limit of the content is, with respect to 100 parts by mass of the polyethylene terephthalate resin, preferably 1.0 parts by mass or less, more preferably 0.6 parts by mass or less, further preferably 0.5 parts by mass or less, and may even be 0.4 parts by mass or less. By setting the content to be equal to or less than the above upper limit, decomposition of the composition is suppressed, and mechanical strength is improved. In addition, the strength retention rate after the wet heat test tends to be higher, and molding defects due to increased viscosity tend to occur less easily. By using bio-PET or recycled PET as the polyethylene terephthalate resin, it tends to be possible to reduce the amount of nucleating agent in the composition. By reducing the amount of nucleating agent, the mechanical strength is improved, and it tends to be possible to increase the strength retention rate after the wet heat test.

The resin composition of the present embodiment may contain only one type of the nucleating agent, or may contain two or more types of the nucleating agent. When the resin composition contains two or more types, the total amount is preferably within the ranges described above.

When the resin composition of this embodiment contains a reactive compound (preferably an epoxy compound) and an alkali metal salt of a fatty acid, the mass ratio of the content [reactive compound (preferably an epoxy compound)/alkali metal salt of a fatty acid] is preferably from 0.1 to 10, more preferably from 0.3 to 5, and much further preferably from 0.4 to 4.5. By setting the mass ratio to be equal to or less than the above upper limit, thickening of the composition tends to be suppressed, and the mold release properties of the composition also tend to be improved. Further, by setting the mass ratio to be equal to or more than the above lower limit, decomposition of the composition tends to be suppressed, and the mechanical strength tends to be improved.

<Method for producing resin composition>

The resin composition of the present embodiment can be produced by a conventional method for preparing resin compositions. Usually, each component and the various additives to be optionally added are thoroughly mixed together, and then melt-kneaded using a single-screw or twin-screw extruder. Alternatively, the resin composition of the present embodiment can be prepared without mixing each component in advance, by pre-mixing only a part of the components, and feeding the mixture into an extruder using a feeder, and melt-kneading. Also, a masterbatch may be prepared by melt-kneading a part of the components such as the colorant with a thermoplastic resin, and then adding the remaining components and melt-kneading the mixture.

In addition, when using an inorganic filler, it is preferred to feed the inorganic filler from a side feeder at a point along the cylinder of the extruder.

The heating temperature during melt-kneading can be normally selected as appropriate from the range of 250 to 300°C. If the temperature is too high, decomposition gas tends to be generated, which may cause opacity. Therefore, it is desirable to select a screw configuration that takes shear heat generation into consideration. In order to suppress decomposition during the kneading and subsequent molding, it is desirable to use an antioxidant and a heat stabilizer.

<Method for producing molded article>

The resin composition of the present embodiment is molded according to a known method.

The method for producing the molded article is not particularly limited, and any molding method commonly used for resin compositions can be adopted. Examples include injection molding, ultra-high-speed injection molding, injection compression molding, two-color molding, gas-assisted blow molding, molding using a heat-insulated mold, molding using a rapid heating mold, foam molding (including supercritical fluid), insert molding, IMC (in-mold coating molding) molding, extrusion molding, sheet molding, thermoforming, rotational molding, lamination molding, press molding, blow molding, and the like, among which an injection molding method is preferred.

Details regarding the injection molding method may be found in the descriptions in paragraphs 0113 to 0116 of Japanese Patent Laid-Open No. 6183822 B, the contents of which are incorporated herein by reference.

Further, the mold temperature during mold molding such as injection molding is preferably from 40 to 150°C.

<Uses>

One mode of the resin composition of this embodiment is a pellet

The resin composition of this embodiment can be used as a molded article formed from the resin composition or pellets of the resin composition. Uses of the resin composition or the molded products are not particularly defined, and preferred examples include electrical/electronic devices/components, OA devices/components, information terminal devices/components, mechanical components, home appliances, vehicle components (interior/exterior of automobiles), construction materials, various containers, leisure goods/miscellaneous goods, lighting equipment, and the like.

Among these, vehicle components are preferred, and vehicle exterior components are more preferred, such as door mirrors, stays for interior mirrors, outer handles, wiper components, and the like.

[Examples]

The present invention will now be explained in more detail with reference to the following examples. The materials, usage amounts, proportions, processing details, processing procedures, and the like described in the following examples can be changed as appropriate without departing from the spirit of the present invention. Therefore, the scope of the present invention is not limited to the specific examples shown below.

If the measuring equipment and the like used in the examples is difficult to obtain due to discontinuation, for example, the measurements can be performed using other equipment with an equivalent performance.

1. The following raw materials were used.

[Tables 1]

| Raw Material | Details |
|---|---|
| Virgin PET | Polyethylene terephthalate resin<br>Trade name: "Novapet PBK1", manufactured by Mitsubishi Chemical Corporation<br>Intrinsic viscosity: 0.64 dL/g, isophthalic acid copolymer percentage 0 mol% |
| Bio PET | Biomass-derived polyethylene terephthalate resin<br>Trade name: "N1B", manufactured by Indorama Ventures<br>Intrinsic viscosity: 0.81 dL/g, isophthalic acid copolymer percentage 1.7 mol% |
| PCR-PET | Bottle-derived recycled polyethylene terephthalate resin<br>Trade name: "N1-100", manufactured by Indorama Ventures<br>Intrinsic viscosity: 0.83 dL/g, isophthalic acid copolymer percentage 1.7 mol% |
| Nucleating agent-1 | Montanic acid sodium salt<br>Trade name: "NAV101", manufactured by Clariant Chemical Company,<br>Acid value: $\leq 5$ mg KOH/g |
| Nucleating agent-2 | Talc<br>Trade name: "MW500S", manufactured by Hayashi Kasei Co., Ltd.,<br>Average particle diameter 4.75 $\mu$m |
| Reactive compound | Bisphenol A type epoxy resin (liquid)<br>Trade name: "EP-17", manufactured by ADEKA<br>Epoxy equivalent: 185 (g/eq)<br>Number average molecular weight: 370 |

(continued)

| Raw Material | Details |
|---|---|
| Mold release agent | Ethylene bisstearamide mold release agent<br>Trade name: "Light Amide WH255", manufactured by Kyoeisha Chemical Co., Ltd.<br>Acid value: ≤15 mg KOH/g |

[Tables 2]

| Raw Material | Details |
|---|---|
| Stabilizer-1 | Pentaerythritol tetrakis[3-(3,5-di-tert-butyl-4-hydroxyphenyl)propionate]<br>Trade name: "ADK Stab AO-60", manufactured by ADEKA |
| Stabilizer-2 | 3,9-Bis(2,6-di-tert-butyl-4-ethylphenoxy)-2,4,8,10-tetraoxa-3,9-diphosphaspiro[5.5]undecane<br>Trade name: "PEP-36", manufactured by ADEKA, melting point 234°C-240°C, molecular weight: 633 |
| CB-MB-1 | Carbon black masterbatch<br>Carbon black/PBT = 19181 (mass ratio)<br>Carbon black:<br>Trade name: "#650B" manufactured by Mitsubishi Chemical Corporation, number average particle size: 22 nm, coloring power: 125%, DBP oil absorption amount: 114 $cm^3$/100 g<br>Polybutylene terephthalate:<br>Trade name: "NOVADURAN 5008", manufactured by Mitsubishi Engineering-Plastics Corporation |
| CB-MB-2 | Carbon black masterbatch<br>Carbon black/PBT = 30/70 (mass ratio)<br>Carbon black:<br>Number average particle size: 24 nm, coloring power: 136%, DBP oil absorption amount: 66 $cm^3$/100 g<br>Polyethylene terephthalate:<br>Trade name: "Novapet PBK1", manufactured by Mitsubishi Engineering-Plastics Corporation |
| Fibrous inorganic filler | Trade name: "T-187H", manufactured by Nippon Electric Glass Co., Ltd.<br>Number average fiber diameter: 11 μm, number average fiber length: 3 mm |

The details of the PET were as follows.

[Table 3]

| | | Virgin PET | Bio PET | PCR-PET |
|---|---|---|---|---|
| Intrinsic viscosity | (dL/g) | 0.64 | 0.81 | 0.83 |
| Isophthalic acid copolymer percentage | (mol%) | 0 | 1.7 | 1.7 |
| DSC(1st run) | Tc1(°C) | 139 | No peak | No peak |
| | $\Delta H_{Tc1}$(J/g) | -21.4 | No peak | No peak |
| | Tm(°C) | 254 | 238 | 240 |
| | $\Delta H_{Tm}$(J/g) | 43.5 | 58.3 | 52.3 |
| | Tc2(°C) | No peak | No peak | 175 |
| | $\Delta H_{Tc2}$(J/g) | No peak | No peak | -28.1 |

(continued)

|  | | Virgin PET | Bio PET | PCR-PET |
|---|---|---|---|---|
| DSC(2nd run) | Tc1(°C) | 166 | No peak | No peak |
| | $\Delta H_{Tc1}$(J/g) | -22.7 | No peak | No peak |
| | Tm(°C) | 252 | 243 | 245 |
| | $\Delta H_{Tm}$(J/g) | 36.1 | 23.7 | 28.1 |
| | Tc2(°C) | No peak | No peak | 162 |
| | $\Delta H_{Tc2}$(J/g) | No peak | No peak | -24.5 |
| MVR(265°C × 5kgf) | cm$^3$/10min | 110 | - | 31 |
| DEG | mol% | 2.0 | - | 2.2 |
| AV | eqlt | 46.7 | - | 39.9 |
| GPC | Mn | $0.85 \times 10^4$ | - | $1.4 \times 10^4$ |
| | Mw | $2.5 \times 10^4$ | - | $4.0 \times 10^4$ |
| | Mz | $4.4 \times 10^4$ | - | $7.3 \times 10^4$ |
| | Mw/Mn | 3.0 | - | 2.9 |
| HPLC (% by mass) | Cyclic trimer | 0.87 | - | 0.36 |
| | Cyclic tetramer | 0.26 | - | 0.10 |
| | Cyclic pentamer | 0.13 | - | 0.03 |
| | Total of cyclic forms | 1.26 | - | 0.49 |
| Metal element qualitative/semi-quantitative analysis ($\mu$g/g) | Na ($\mu$g/g) | n.d | - | 2.3 |
| | Mg ($\mu$g/g) | 65 | - | 1.9 |
| | P ($\mu$g/g) | 26 | - | 8.0 |
| | Ca ($\mu$g/g) | n.d | - | 5.5 |
| | Ti ($\mu$g/g) | n.d | - | 2.5 |
| | Fe ($\mu$g/g) | 0.7 | - | 2.6 |
| | Ge ($\mu$g/g) | n.d | - | n.d |
| | Sb ($\mu$g/g) | 200 | - | 220 |

In the above table, "n. d" indicates that the measured value was below the detection limit.

Detection limit values: Ca 0.2 ($\mu$g/g), Na 0.2 ($\mu$g/g), Ti 0.2 (pg/g), Ge 3 ($\mu$g/g)

<Measurement of intrinsic viscosity>

Polyethylene terephthalate resin pellets were dissolved in a mixed solvent of phenol/1,1,2,2-tetrachloroethane (mass ratio 1/1) so that the concentration was 1.00 g/dL by stirring at 110°C for 1 hour. The mixture was then cooled to 30°C. Using a fully automatic solution viscometer, the number of seconds for the sample solution to fall and the number of seconds for only the solvent to fall were measured at 30°C, and the intrinsic viscosity was calculated using the following formula (1).

$$\text{Intrinsic viscosity} = ((1+4K_H\eta_{sp})^{0.5}-1)/(2K_HC) \quad (1)$$

Here, $\eta_{sp}=\eta/\eta_0-1$, wherein $\eta$ is the number of seconds for the sample solution to fall, $\eta_0$ is the number of seconds for only the solvent to fall, C is the sample solution concentration (g/dL), and $K_H$ is Huggins' constant. $K_H$ was set at 0.33.

A fully automatic solution viscometer manufactured by Shibayama Scientific Co., Ltd. was used.

<Measurement by DSC>

The crystallization temperature, heat of crystallization, melting point, and heat of fusion of the polyethylene terephthalate resin were measured using a differential scanning calorimeter (DSC) based on JIS K7121. The temperature was raised from 40°C to 300°C at a rate of temperature increase of 20 °C/min in a nitrogen atmosphere, held at 300°C for 3 minutes, and then lowered to 40°C at a rate of temperature cooling of -20 °C/min. This was taken as one cycle. The temperature of the maximum peak due to crystallization during the heating phase was defined as crystallization temperature Tc1, and the heat of crystallization was determined as $\Delta H_{Tc1}$. The melting point Tm and the heat of fusion $\Delta H_{Tm}$ were determined from the peak at the time of fusion. The temperature of the maximum peak due to crystallization during the cooling phase was defined as crystallization temperature Tc2 and heat of crystallization $\Delta H_{Tc2}$. When the absolute value of the heat of crystallization $\Delta H$ of the peak during crystallization during the heating phase and the cooling phase was less than 3 J/g, or when there was no peak, such cases were classified as "no peak" in the above table. The heat of fusion $\Delta H_{Tm}$, was taken to be the area surrounded by the endothermic peak and the baseline, the heat of crystallization $\Delta H_{TC1}$ was taken to be the area surrounded by the exothermic peak of crystallization which was confirmed below the melting point during the heating phase and the baseline, and the heat of crystallization $\Delta H_{TC2}$ was taken to be the area surrounded by the exothermic peak during the cooling phase and the baseline.

A "DSC7020" manufactured by Hitachi High-Tech Science Corporation was used as the differential scanning calorimeter.

<Measurement of MVR>

The MVR was determined by measuring the melt flow volume MVR (unit: $cm^3$/10 minutes) per unit time of the pellets obtained above using a melt indexer under conditions of 265°C and a load of 5 kgf.

The melt indexer used was manufactured by Takara Kougyou.

<Measurement of isophthalic acid amount and DEG amount>

The amount of isophthalic acid and the amount of DEG (diethylene glycol) in the polyethylene terephthalate resin were measured by $^1$H-NMR.

The $^1$H-NMR measurement was performed using an AVANC III (manufactured by Bruker BioSpin).

<Measurement of terminal carboxyl group content (AV)>

A sample was obtained by pulverizing the polyethylene terephthalate resin, then drying in a hot air dryer at 140°C for 15 minutes, and cooling to room temperature in a desiccator. From the sample, 0.1 g was accurately weighed and collected in a test tube, to which 3 mL of benzyl alcohol was added, and the mixture was made to dissolve at 195°C for 3 minutes while blowing dry nitrogen gas. Then, 5 mL of chloroform was gradually added, the mixture was cooled to room temperature, 1 to 2 drops of phenol red indicator were added to the solution, and titration was performed with a 0.1 N solution of sodium hydroxide in benzyl alcohol under stirring while blowing dry nitrogen gas. The titration was ended when the color changed from yellow to red. In addition, as a blank, the same operation was performed without dissolving the polyester sample, and the terminal carboxyl group content (acid value) was calculated using the following formula.

```
Terminal carboxyl group content (eq/ton) = (a-b)×0.1×f/w
```

In the formula, a is the amount (μL) of the 0.1 N solution of sodium hydroxide in benzyl alcohol required for the titration, and b is the amount (μL) of the 0.1 N solution of sodium hydroxide in benzyl alcohol required for the titration without a sample, w is the amount (g) of the polyester sample, and f is the titer of 0.1 N solution of sodium hydroxide in benzyl alcohol.

<Measurement by GPC>

The molecular weight (Mw, Mn, and Mz) of the polyethylene terephthalate resin was measured as follows.

The polyethylene terephthalate resin was weighed, a predetermined amount of HFIP (hexafluoro-2-propanol) and a 10 mM-CF$_3$COONa eluent were added, and the resin was allowed to stand overnight at room temperature to dissolve. Next, filtration was performed using a 0.45 μm PTFE cartridge filter. The molecular weight of the dissolved sample (filtrate) was measured by GPC. A cubic approximation curve using standard PMMA was used for the calibration curve, and taken as the molecular weight in terms of PMMA.

In the measurement by GPC, an HLC-8420GPC (manufactured by Tosoh) was used as a column.

2. Examples 1 to 9 and Comparative Examples 1 to 4

<Compound>

Each of the components, except for the glass fiber, shown in Table 1 or 2 were uniformly mixed in the proportions (parts by mass) shown in Table 4 or 5 using a tumbler mixer, the mixture was then charged into the hopper of a twin-screw extruder ("TEX30α" manufactured by Japan Steel Works, Ltd.), the glass fiber was fed from a side feeder, and melt-kneaded at a cylinder set temperature of 280°C and a screw rotation speed of 200 rpm, and the obtained resin composition was rapidly cooled in a water tank and pelletized using a pelletizer to obtain pellets of the resin composition.

<Unnotched Charpy impact strength>

The resin composition pellets obtained above were dried at 120°C for 5 hours, and then JIS K7139 multipurpose test specimens (4 mm thick) were injection-molded using an injection molding machine (J-85AD-60H) under conditions of a cylinder temperature of 290°C and a mold temperature of 140°C.

Using the multipurpose test specimens (4 mm thick), the unnotched Charpy impact strength (unit: KJ/m$^2$) was measured based on the JIS K7111-1 standard.

<Bending strength>

Using the multipurpose test specimens (4 mm thick) obtained above, a bending test (unit: MPa) was measured based on the JIS K7171 standard.

<Molding shrinkage rate>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 290°C and a mold temperature of 80°C. The obtained test specimen was conditioned for 24 hours or more under an environment of room temperature 23°C and humidity 50% RH.

Then, the dimensions in the MD (Machine Direction, also referred to as flow direction) and TD (Transverse Direction, also referred to as perpendicular direction) directions of the obtained test specimen were measured, and the molding shrinkage rate (unit: %) was calculated based on the dimensions of the mold.

<Box-shape mold release properties>

The pellets obtained above were dried at 120°C for 5 hours, and box-shape molded articles having a thickness of 1.5 mmt and external dimensions of 30×50×15 mm were molded using an injection molding machine manufactured by Japan Steel Works, Ltd. (clamping force 50 T), under conditions of the cylinder temperature of 290°C and mold temperature of 100°C, and cooling time of 30 or 20 seconds. The maximum mold release resistance value (unit: MPa) when the ejector pin was pressed to release the mold was evaluated as the mold release resistance. If the maximum mold release resistance value is 15 MPa or less, it can be determined that there is no problem when it is used as an actual product.

<Grain transferability>

The pellets obtained above were dried at 120°C for 5 hours, then using an injection molding machine manufactured by Japan Steel Works Ltd., (clamping force 100T), molded articles (length 60 mm, width 60 mm, thickness 1.5 mm, embossed with 15 μm grains on the surface) were molded for 25 seconds under conditions of a cylinder temperature of 290°C and a mold temperature of 140°C, and the surface was observed.

A: Articles having evenness in the embossed grains on the surface
B: Articles having no evenness in the embossed grains on the surface

<Strength retention rate (%) after wet heat>

The initial tensile strength (unit: MPa) of the multipurpose test specimens (4 mm thick) obtained above was measured based on the JIS K7161 standard. Further, after treating for 25 hours at 121°C, 2 atm, and 100% RH, the tensile strength (unit: MPa) after a wet heat test based on the JIS K7161 standard was measured using highly accelerated stress test equipment (PC-R8D, manufactured by Hirayama Manufacturing Corporation), and the tensile strength retention rate (unit: %) after the wet heat test was determined from the initial tensile strength and the tensile strength after the wet heat test.

[Tables 4]

| | | Example 1 | Example 2 | Comparative Example 1 | Example 5 | Example 6 | Comparative Example 3 |
|---|---|---|---|---|---|---|---|
| Composition | Virgin PET | | | 100.0 | | | 100.0 |
| | Bio PET | | 100.0 | | | 100.0 | |
| | PCR-PET | 100.0 | | | 100.0 | | |
| | Nucleating agent-1 | 0.2 | 0.2 | 0.2 | 0.2 | 0.2 | 0.2 |
| | Nucleating agent-2 | | | | | | |
| | Reactive compound | 0.8 | 0.8 | 0.8 | 0.8 | 0.8 | 0.8 |
| | Mold release agent | 0.6 | 0.6 | 0.6 | 0.6 | 0.6 | 0.6 |
| | Stabilizer-1 | 0.2 | 0.2 | 0.2 | 0.2 | 0.2 | 0.2 |
| | Stabilizer-2 | 0.2 | 0.2 | 0.2 | 0.2 | 0.2 | 0.2 |
| | CB-MB-1 | 10.2 | 10.2 | 10.2 | | | |
| | CB-MB-2 | | | | 10.2 | 10.2 | 10.2 |
| | Fibrous inorganic filler | 91.8 | 91.8 | 91.8 | 91.8 | 91.8 | 91.8 |
| Unnotched Charpy impact strength (kJ/m$^2$) | | 56 | 53 | 42 | 56 | 53 | 42 |
| Bending strength (MPa) | | - | - | - | 311 | 304 | 303 |
| Molding shrinkage rate | Initial molding shrinkage rate (MD) | - | - | - | - | - | - |
| | Initial molding shrinkage rate (TD) | - | - | - | - | - | - |
| | Molding conditions (cylinder temperature) (°C) | - | - | - | - | - | - |
| | Molding conditions (mold temperature) (°C) | - | - | - | - | - | - |

(continued)

| | | Example 1 | Example 2 | Comparative Example 1 | Example 5 | Example 6 | Comparative Example 3 |
|---|---|---|---|---|---|---|---|
| Box-shape mold release | Mold release resistance (cooling time 30 s) (MPa) | 6.4 | 6.2 | Bursting | 6.4 | 6.2 | Bursting |
| | Mold release resistance (cooling time 20 s) (MPa) | 6.5 | 5.1 | Bursting | 6.5 | 5.1 | Bursting |
| | Molding conditions (cylinder temperature) (°C) | 290 | 290 | 290 | 290 | 290 | 290 |
| | Molding conditions (mold temperature) (°C) | 100 | 100 | 100 | 100 | 100 | 100 |
| Grain transferability | | A | A | B | A | A | B |
| Strength retention rate (%) after wet heat | | - | - | - | - | - | - |

[Tables 5]

| | | Example 3 | Example 4 | Comparative Example 2 |
|---|---|---|---|---|
| Composition | Virgin PET | | | 100.0 |
| | Bio PET | | 100.0 | |
| | PCR-PET | 100.0 | | |
| | Nucleating agent-1 | 0.4 | 0.4 | 0.4 |
| | Nucleating agent-2 | | | |
| | Reactive compound | 0.8 | 0.8 | 0.8 |
| | Mold release agent | 0.6 | 0.6 | 0.6 |
| | Stabilizer-1 | 0.2 | 0.2 | 0.2 |
| | Stabilizer-2 | 0.2 | 0.2 | 0.2 |
| | CB-MB-1 | 10.2 | 10.2 | 10.2 |
| | CB-MB-2 | | | |
| | Fibrous inorganic filler | 92.0 | 92.0 | 92.0 |
| Unnotched Charpy impact strength (kJ/m$^2$) | | 50 | 51 | 42 |
| Bending strength (MPa) | | - | - | . |

(continued)

| | | Example 3 | Example 4 | Comparative Example 2 |
|---|---|---|---|---|
| Molding shrinkage rate | Initial molding shrinkage rate (MD) | 0.13 | 0.13 | 0.18 |
| | Initial molding shrinkage rate (TD) | 0.37 | 0.37 | 0.43 |
| | Molding conditions (cylinder temperature) (°C) | 290 | 290 | 290 |
| | Molding conditions (mold temperature) (°C) | 80 | 80 | 80 |
| Box-shape mold release | Mold release resistance (cooling time 30 s) (MPa) | 5.2 | 4.8 | 6.4 |
| | Mold release resistance (cooling time 20 s) (MPa) | 5.2 | 5.3 | 6.7 |
| | Molding conditions (cylinder temperature) (°C) | 290 | 290 | 290 |
| | Molding conditions (mold temperature) (°C) | 100 | 100 | 100 |
| Grain transferability | | A | A | B |
| Strength retention rate (%) after wet heat | | - | - | - |

[Tables 6]

| | | Example 7 | Example 8 | Comparative Example 4 | Example 9 |
|---|---|---|---|---|---|
| Composition | Virgin PET | | | 100.0 | |
| | Bio PET | | 100.0 | | |
| | PCR-PET | 100.0 | | | 100.0 |
| | Nucleating agent-1 | 0.4 | 0.4 | 0.4 | 0.7 |
| | Nucleating agent-2 | | | | |
| | Reactive compound | 0.8 | 0.8 | 0.8 | 0.8 |
| | Mold release agent | 0.6 | 0.6 | 0.6 | 0.6 |
| | Stabilizer-1 | 0.2 | 0.2 | 0.2 | 0.2 |
| | Stabilizer-2 | 0.2 | 0.2 | 0.2 | 0.2 |
| | CB-MB-1 | | | | |
| | CB-MB-2 | 10.2 | 10.2 | 10.2 | 10.3 |
| | Fibrous inorganic filler | 92.0 | 92.0 | 92.0 | 92.9 |
| Unnotched Charpy impact strength (kJ/m$^2$) | | 50 | 51 | 42 | 50 |
| Bending strength (MPa) | | 309 | 310 | 304 | 310 |

(continued)

| | | Example 7 | Example 8 | Comparative Example 4 | Example 9 |
|---|---|---|---|---|---|
| Molding shrinkage rate | Initial molding shrinkage rate (MD) | 0.13 | 0.13 | 0.18 | 0.20 |
| | Initial molding shrinkage rate (TD) | 0.37 | 0.37 | 0.43 | 0.52 |
| | Molding conditions (cylinder temperature) (°C) | 290 | 290 | 290 | 290 |
| | Molding conditions (mold temperature) (°C) | 80 | 80 | 80 | 80 |
| Box-shape mold release | Mold release resistance (cooling time 30 s) (MPa) | 5.2 | 4.8 | 6.4 | Evaluation not possible due to increased viscosity |
| | Mold release resistance (cooling time 20 s) (MPa) | 5.2 | 5.3 | 6.7 | Evaluation not possible due to increased viscosity |
| | Molding conditions (cylinder temperature) (°C) | 290 | 290 | 290 | 290 |
| | Molding conditions (mold temperature) (°C) | 100 | 100 | 100 | 100 |
| Grain transferability | | A | A | B | B |
| Strength retention rate (%) after wet heat | | 55 | - | - | 44 |

The molded articles formed from the resin composition of the present invention had excellent impact resistance. Further, the molded articles formed from the resin composition of the present invention had excellent mold release properties, as well as excellent grain transferability.

## Claims

1. A resin composition comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,
the polyethylene terephthalate resin has an absolute value of a heat of crystallization during a heating phase in a first cycle ($\Delta H_{Tc1}$-1st) of the operation and/or an absolute value of a heat of crystallization during the heating phase in a second cycle ($\Delta H_{Tc1}$-2nd) of the operation of less than 3 J/g, and a content of the inorganic filler in the resin composition is 40% by mass or more.

2. The resin composition according to claim 1 comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,
wherein the polyethylene terephthalate resin has an absolute value of a heat of crystallization during a heating phase in a first cycle ($\Delta H_{Tc1}$-1st) of the operation of less than 3 J/g, and a content of the inorganic filler in the resin composition is 40% by mass or more.

3. The resin composition according to claim 1 comprising a polyethylene terephthalate resin and an inorganic filler, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min,
wherein the polyethylene terephthalate resin has an absolute value of a heat of crystallization during a heating phase in a second cycle ($\Delta H_{Tc1}$-2nd) of the operation of less than 3 J/g, and a content of the inorganic filler in the resin composition is 40% by mass or more.

4. The resin composition according to claim 1 or 2, wherein the polyethylene terephthalate resin comprises a unit derived from an isophthalic acid in a proportion of 0.5 mol% or more and 15.0 mol% or less of all units derived from a dicarboxylic acid component.

5. The resin composition according to claim 1 or 2, wherein the polyethylene terephthalate resin has an intrinsic viscosity of 0.60 dL/g or more.

6. The resin composition according to claim 1 or 2, wherein the polyethylene terephthalate resin comprises a recycled product.

7. The resin composition according to claim 1 or 2, wherein the polyethylene terephthalate resin comprises a polyethylene terephthalate resin in which at least a part of a raw material is a bio-derived raw material.

8. The resin composition according to claim 1 or 2, wherein the inorganic filler comprises a fibrous inorganic filler.

9. The resin composition according to claim 1 or 2, which further comprises a nucleating agent in a proportion of from 0.01 to 10 parts by mass with respect to 100 parts by mass of the polyethylene terephthalate resin.

10. The resin composition according to claim 9, wherein the nucleating agent comprises an alkali metal salt of a fatty acid.

11. The resin composition according to claim 10, wherein the nucleating agent has a content of from 0.05 to 1 part by mass.

12. The resin composition according to claim 10, wherein the nucleating agent has a content of from 0.1 to 0.6 part by mass.

13. The resin composition according to claim 1 or 2, which further comprises carbon black in a proportion of from 0.01 to 6 parts by mass with respect to 100 parts by mass of the polyethylene terephthalate resin.

14. The resin composition according to claim 1 or 2, which further comprises a reactive compound in a proportion of from 0.01 to 10.0 parts by mass with respect to 100 parts by mass of the polyethylene terephthalate resin.

15. The resin composition according to claim 1 or 2, which is for a vehicle component.

16. The resin composition according to claim 1 or 2, which is used for vehicle exterior component.

17. The resin composition according to claim 1, wherein

0.5 mol% or more and 15.0 mol% or less of the polyethylene terephthalate resin with respect to all units derived from a dicarboxylic acid component is modified with an isophthalic acid,
the polyethylene terephthalate resin has an intrinsic viscosity of 0.60 dL/g or more,
the inorganic filler comprises a fibrous inorganic filler,
the resin composition further comprises a nucleating agent in a proportion of from 0.01 to 10 parts by mass with respect to 100 parts by mass of the polyethylene terephthalate resin,
the nucleating agent comprises an alkali metal salt of a fatty acid,
the resin composition further comprises carbon black in a proportion of from 0.01 to 6 parts by mass with respect to 100 parts by mass of the polyethylene terephthalate resin, and
the resin composition further comprises an epoxy compound in a proportion of from 0.01 to 10 parts by mass with respect to 100 parts by mass of the polyethylene terephthalate resin.

18. The resin composition according to claim 17, wherein the polyethylene terephthalate resin comprises a recycled product.

19. A molded article formed from the resin composition of any one of claims 1, 2, 17, or 18.

20. A vehicle exterior component formed from the resin composition of any one of claims 1, 2, 17, or 18.

21. A pellet of the resin composition of any one of claims 1, 2, 17, or 18.

## INTERNATIONAL SEARCH REPORT

| International application No. |
| --- |
| **PCT/JP2022/044036** |

**A.    CLASSIFICATION OF SUBJECT MATTER**

*C08L 67/02*(2006.01)i; *C08K 3/013*(2018.01)i; *C08K 3/04*(2006.01)i; *C08K 7/04*(2006.01)i
FI:    C08L67/02; C08K3/013; C08K7/04; C08K3/04

According to International Patent Classification (IPC) or to both national classification and IPC

**B.    FIELDS SEARCHED**

Minimum documentation searched (classification system followed by classification symbols)

C08L67/02; C08K3/013; C08K3/04; C08K7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2018-12836 A (UNITIKA LTD.) 25 January 2018 (2018-01-25)<br>claims, paragraph [0015], examples 1-6, 9 | 1-15, 17-19, 21 |
| X | JP 2018-203932 A (WINTECH POLYMER LTD) 27 December 2018 (2018-12-27)<br>claims, paragraph [0054], examples, comparative example 3 | 1-21 |
| X | JP 8-183114 A (POLYPLASTICS CO) 16 July 1996 (1996-07-16)<br>claims, paragraphs [0001], [0006], [0011], examples 1-2, 4, 6-11, 14-15 | 1-21 |
| X | JP 2007-154079 A (ASAHI KASEI CHEMICALS CORP) 21 June 2007 (2007-06-21)<br>claims, paragraphs [0002], [0035], [0046], [0048], example 11 | 1-21 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 January 2023** | **24 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/044036**

| Patent document cited in search report | | | Publication date (day/month/year) | Patent family member(s) | | Publication date (day/month/year) |
|---|---|---|---|---|---|---|
| JP | 2018-12836 | A | 25 January 2018 | (Family: none) | | |
| JP | 2018-203932 | A | 27 December 2018 | CN | 110753729 A | |
| JP | 8-183114 | A | 16 July 1996 | (Family: none) | | |
| JP | 2007-154079 | A | 21 June 2007 | (Family: none) | | |

Form PCT/ISA/210 (patent family annex) (January 2015)

## REFERENCES CITED IN THE DESCRIPTION

**Patent documents cited in the description**

- WO 2019217680 A
- JP 2018203932 A
- WO 2020246335 A
- JP 2017052925 A
- JP 2017052262 A
- JP 2018070722 A
- JP 2019123809 A
- JP 2021063196 A

- JP 2019 A
- JP 056035 A
- WO 2017038949 A
- JP 2021101020 A
- JP 2019188393 A
- JP 2020199755 A
- JP 2020125468 A
- JP 6183822 B